# EUROPEAN PATENT SPECIFICATION

(11) **EP 3 663 026 B1**
(45) Date of publication and mention of the grant of the patent: **18.10.2023**
(21) Application number: 18871457.0
(22) Date of filing: 30.08.2018
(51) Int. Cl.: B23B 29/24, B23B 3/16, B23B 7/04, B23B 21/00, B23Q 1/48, B23Q 1/62, B23Q 39/02, B23Q 39/00

(54) **LATHE**
DREHBANK
TOUR

(30) Priority: 24.10.2017 JP 2017204905
(43) Date of publication of application: 10.06.2020
(73) Proprietor: Star Micronics Co., Ltd., Shizuoka-shi, Shizuoka 422-8654 (JP)
(72) Inventor: KAWASUMI, Masahiro, Shizuoka-shi, Shizuoka 422-8654 (JP)
(74) Representative: Manitz Finsterwald Patent- und Rechtsanwaltspartnerschaft mbB
(86) International application number: PCT/JP2018/032199
(87) International publication number: WO 2019/082507

(56) References cited:
- EP-A1- 0 538 515
- EP-A1- 1 897 640
- DE-A1- 19 952 361
- DE-A1-102011 076 837
- GB-A- 2 019 752
- JP-A- 2008 062 357
- JP-A- 2014 515 995
- JP-U- H0 544 401
- US-A- 3 750 245
- US-A1- 2004 129 120
- US-A1- 2007 044 290
- US-A1- 2007 044 290

## Description

### TECHNICAL FIELD

The present invention relates to a lathe having a spindle and a turret.

### BACKGROUD ART

An NC (numerical control) lathe provided with a front spindle and a back spindle which each rotates a workpiece on a spindle axis and further with a turret is well known. In an NC lathe disclosed in JP 2014-518777 A, a tool turret head having a dozen of turret surfaces is mounted on a second tool post in a rotatable manner around a turret axis. The second tool post is rotated on a B-axis perpendicular to the turret axis. The tool turret head is in a position to deviate from the B-axis. The second tool post on which the tool turret head is mounted is rotated on the B-axis while the tool turret head is rotated on the turret axis perpendicular to the B-axis. Another similar lathe is known from DE 10 2011 076 837 A1.

EP 0 538 515 A1 discloses a lathe according to the preamble of claim 1.

### TECHNICAL PROBLEM

The entire turret having the decentered turret head with respect to the B-axis occupies a larger area during rotation on the B-axis, which increases the size of the machine. A servo motor for rotating the turret head on the turret axis is needed while another servo motor for rotating the entire turret on the B-axis is also needed, which increases the cost of the machine. Such problem resides in various kinds of lathes.

The purpose of the invention is to provide a technology capable of downsizing the mahcine.

### TECHNICAL SOLUTION

The lathe of the invention comprises a spindle which rotates a workpiece on a spindle axis, a turret head, a tool unit switching driving unit, and a turret driver. The turret head has a plurality of turret surfaces to which a tool unit is radially attached around an indexing axis. To at least part of the turret surfaces, the tool unit is attached in a plurality of attaching positions provided in an indexing axis direction along the indexing axis. The tool unit switching driving unit rotates the turret head on the indexing axis and moves the turret head in the indexing axis direction to switch the tool units for use to machine the workpiece. The turret driver comprises a Y-axis direction feeding mechanism bidirectionally moving the turret head in the indexing axis direction, an X-axis direction feeding mechanism bidirectionally moving the turret head and the Y-axis direction feeding mechanism in a direction the turret head and an opposite tool post facing each other, the direction being different from the indexing axis direction and a spindle axis direction parallel to the spindle axis, and a Z-axis direction feeding mechanism bidirectionally moving the turret head, the Y-axis direction feeding mechanism, and the X-axis direction feeding mechanism in the spindle axis direction. The turret head, the Y-axis direction feeding mechanism, the X-axis direction feeding mechanism, and the Z-axis direction feeding mechanism are sequentially stacked in the indexing axis direction which is a vertical direction with respect to a base of the lathe.

### ADVANTAGEOUS EFFECTS

The invention provides a technology capable of downsizing the machine.

### BRIEF DESCRIPTION OF THE DRAWINGS

FIG. 1 is a plan view of a schematically illustrated NC lathe.
FIG. 2 is a perspective view of a schematically illustrated turret head.
FIG. 3 is a perspective view of a schematically illustrated turret head where a plurality of tool units are attached.
FIG. 4 is a plan view of a schematically illustrated turret head where a plurality of tool units are attached.
FIG. 5 is a side view of a schematically illustrated turret driving unit.
FIG. 6 is a partial sectional view of part of a turret head where a plurality of tool units are attached.
FIG. 7 is a side view of a schematically illustrated opposite tool post driving unit.
FIG. 8A to FIG. 8C each schematically shows the way of workpiece simultaneous machining.

### MODE FOR INVENTION

Hereinafter, an embodiment of the present invention will be described. The invention is not limited to the exemplary embodiment and the features disclosed herein are necessarily not essential to the invention.

### (1) Summary of technnology included in the present invention:

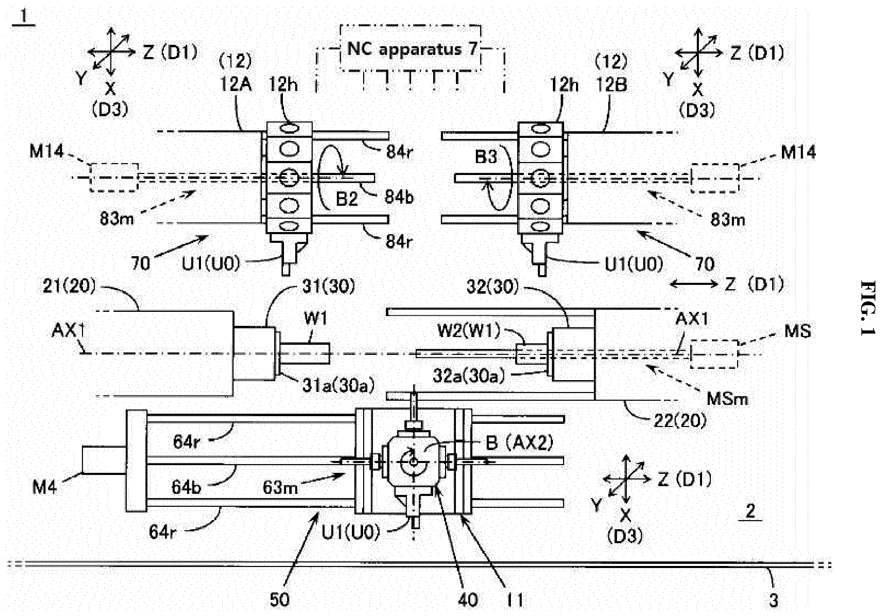

Technology included in the invention will be described with reference to FIG. 1 to FIG. 8. The drawings only schematically show an example of the invention. They may have a mismatch to each other due to different maginification in each direction. Each element denoted by a symbol is only an example.

A lathe 1 of an embodiment of the invention comprises a spindle 30, a turret head 40, and a switching driving unit 51. The spindle 30 rotates a workpiece W1 on a spindle axis AX1. The turret head 40 may have a plurality of turret surfaces 41 to which a tool unit U0 are radially attached around an indexing axis AX2. The tool unit U0 may be attached on a plurality of attaching positions P0 provided on at least part of the plurality of turret surfaces 41. The plurality of attaching positions P0 are arranged in an indexing axis direction D2 along the indexing axis AX2. The turret head 40 is driven by the switching driving unit 51 to be rotated on the indexing axis AX2 and also to be moved in the indexing axis direction D2. The tool units U0 for use are thereby switched.

The tool units U0 for use are switchable only by rotating the turret head 40 on the indexing axis AX2 and by moving the same in the indexing axis direction D2. The invention eliminates the need of rotating the entire turret having the turret head 40, reducing occupied area of the turret compared with a conventional one. The invention also eliminates the need of using a servo motor for rotating the entire turret. The embodiment therefore provides a technology capable of downsizing the lathe.

The indexing axis direction D2 is a different direction from a spindle axis direction D1 of the spindle axis AX1. The lathe 1 further comprises a Z-axis driving unit 52 which moves the turret head 40 in the spindle axis direction D1. Moving the turret head 40 in the spindle axis direction D1 enables the machine to execute various operations on the workpiece W1 without the need of the spindle 30 moving in the spindle axis direction D1. The embodiment provides a technology desired for a lathe of stationary headstock type.

The lathe 1 further comprises an opposite tool post 12 arranged on the opposite side of the turret head 40 across the workpiece W1 in a tool post opposite direction D3. The tool post opposite direction D3 is a different direction from the indexing axis direction D2 and the spindle axis direction D1. The lathe 1 may further comprise a first opposite driving unit 53 which moves the turret head 40 in the tool post opposite direction D3. The lathe 1 may further comprise a second opposite driving unit 71 which moves the opposite tool post 12 in the tool post opposite direction D3. The embodiment enables the lathe to perform balance-cut and various simultaneous operations on the workpiece W1 by using the tool unit U0 attached to the turret head 40 and the tool unit U0 attached to the opposite tool post 12. The embodiment provides an improvement in productivity.

The plurality of turret surfaces 41 of the turret head 40 may comprise four turret surfaces 41a, 41b, 41c, and 41d around the indexing axis AX2. In this embodiment, any tool unit U0 attached to any non-use surface very rarely interferes with the spindle 30. A machining point of the tool unit U0 can be brought close to a chucking point of the spindle 30 for a heavy-cut performance. The embodiment provides high precision operations. Further the workpiece W1 chucked by a front spindle 31 may be machined by the tool unit U0 attached to one of the turret surfaces 41 while a workpiece W2 chucked by a back spindle 32 may be simultaneously machined by the tool unit U0 attached to the opposite turret surface 41. The embodiment provides an improvement in machining performance.

### (2) Configuration of the lathe

FIG. 1 schematically shows the NC lathe 1 of stationary headstock type as an example of the lathe. The lathe 1 may comprise a front headstock 21, a back headstock 22, a turret 11, and opposite tool posts 12A and 12B, which are all mounted on a bed 2. The lathe 1 may further comprise a housing 3. The front spindle 31 is supported on the front headstock 21. The back spindle 32 is supported on the back headstock 22. The front headstock 21 and the back headstock 22 are collectively referred to as a headstock 20. The front spindle 31 and the back spindle 32 are collectively referred to as the spindle 30. The opposite tool posts 12A and 12 B are collectively referred to as the opposite tool post 12. The turret 11 and the opposite tool post 12 are collectively referred to as a tool post. There further is an NC apparatus 7 which numerically controls the headstock 20 and the tool posts 11 and 12. The position thereof is not limited to the FIG. 1 layout.

The back headstock 22 on which the back spindle 32 is supported is movable in the Z-axis direction while the tool posts 11 and 12 are movable in the X-axis, Y-axis, and Z-axis directions. The X-axis, Y-axis, and Z-axis directions may be perpendicular to each other. They may not be perpendicular and may be different directions due to design reasons. They are all within the scope of the invention. The word "perpendicular" is not strictly limited to 90 degrees and may be approximately 90 degrees due to design reasons. The front headstock 21 on which the front spindle 31 is supported may not be movable in any of the X-axis, Y-axis, and Z-axis directions.

The bed 2 may be a table on which the components such as the turret 11, the opposite tool post 12, and the headstock 20 are directly or indirectly supported.

The front spindle 31 and the back spindle 32 may be opposite to each other in the Z-axis direction. The back headstock 22 on which the back spindle 32 is supported may be bidirectionally movable in the Z-axis direction by a Z-axis direction driving motor MS (servo motor) and a Z-axis direction feed mechanism MSm respectively mounted on the bed 2. The spindle 30 supported on the headstock 20 may be provided with a chuck 30a for releasably holding the workpiece W1. The workpiece W1 is rotated on the spindle axis AX1 extended in the longitudinal direction of the workpiece W1. The chuck 30a may comprise a chuck 31a of the front spindle 31 and a chuck 32a of the back spindle 32. The workpiece W1, which is a bar material inserted in the longitudinal direction from the rear side or the front side, may be protruded at a given amount to be held by the chuck 31a. The front side of the workpiece W1 may be machined by the turret 11 and/or the opposite tool post 12A for front machining use. The back headstock 22 may be moved in the Z-axis direction toward the front headstock 21 to receive the front-machined workpiece W2 by the back spindle 32. The workpiece W2 inserted in the Z-axis direction is releasably held by the chuck 32a and rotated on the spindle axis AX1. The front-machined workpiece W2 is within the scope of the workpiece W1. The workpiece W2 held by the chuck 32a of the back spindle 32 may be cut off by a cut-off tool (a tool T0). The back side of the workpiece W2 is then machined by the turret 11 and/or the opposite tool post 12B for back machining use. There may be provided a single common opposite tool post bidirectionally movable in the Z-axis direction. The tool unit U0 attached to the common opposite tool post may be used to work on both the workpiece W1 held by the chuck 31a of the front spindle 31 and the workpiece W2 held by the chuck 32a of the back spindle 32. Alternatively, three or more opposite tool posts may be provided. On the turret side too, one or more tool posts may be provided in addition to the turret 11.

The turret 11 comprises the turret head 40 and a turret driving unit 50. The turret 11 is available for front machining use on the workpiece W1 held by the front spindle 31 and for back machining use on the workpiece W2 held by the back spindle 32. A plurality of tool units U0 may be attached to the turret head 40, among which the tool unit U0 for use is selected. The turret head 40 is bidirectionally moved in the X-axis, Y-axis, and Z-axis directions and rotated on a B-axis by the operation of the turret driving unit 50.

The opposite tool post 12A for front machining use may comprise the turret head 12h and an opposite tool post driving unit 70. The opposite tool post 12A may be arranged on the opposite side of the turret head 40 across the workpiece W1 in the X-axis direction (an example of the tool post opposite direction D3). A plurality of tool units U0 may be attached to the turret head 12h, among which the tool unit for use is selected. The turret head 12h may be bidirectionally moved in the X-axis, Y-axis, and Z-axis directions and rotated on the B2-axis by the operation of the opposite tool post driving unit 70.

The opposite tool post 12B for back machining use may comprise the turret head 12h and the opposite tool post driving unit 70. The opposite tool post 12B may be arranged on the opposite side of the turret head 40 across the workpiece W2 in the X-axis direction (an example of the tool post opposite direction D3). The symbols are commonly used for the tool posts 12A and 12B whose configuration is the same. A plurality of tool units U0 may be attached to the turret head 12h, among which the tool unit for use is selected. The turret head 12h may be bidirectionally moved in the X-axis, Y-axis, and Z-axis directions and rotated on the B3-axis by the operation of the opposite tool post driving unit 70.

The tool posts 11 and 12 are fully described later.

The NC apparatus 7 may comprise a CPU (Central Processing Unit), a ROM (Read Only Memory) for storing an application program, a RAM (Random Access Memory) for storing an NC program, a timer, and an interface. The CPU uses the RAM as a work area to execute the application program, receives an input from a not-shown operation panel and an external computer, and executes the NC program. An operator may use the operation panel and the external computer to store the NC program in the RAM.

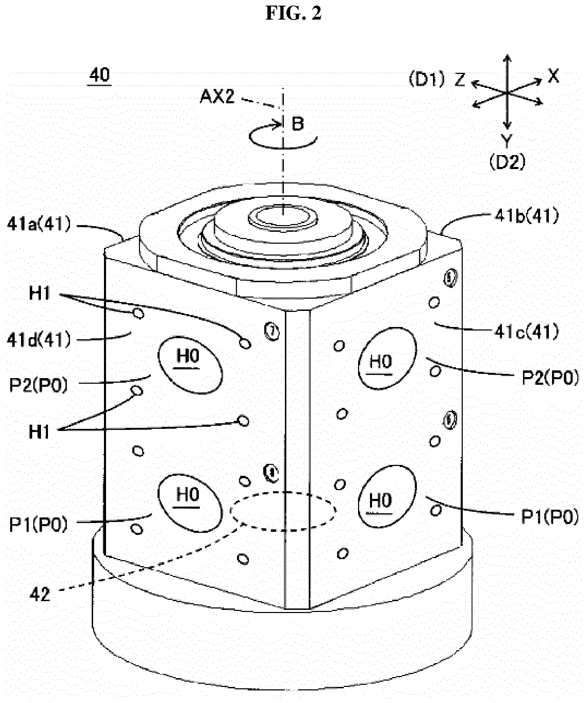

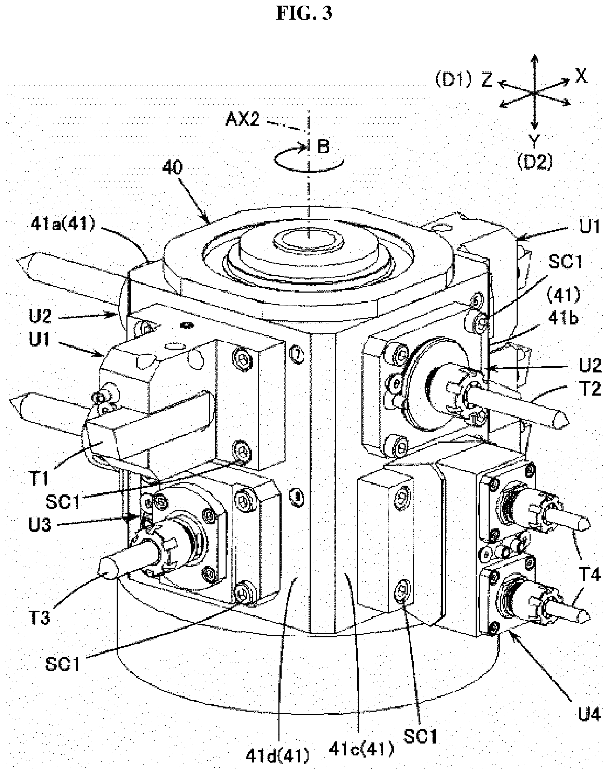

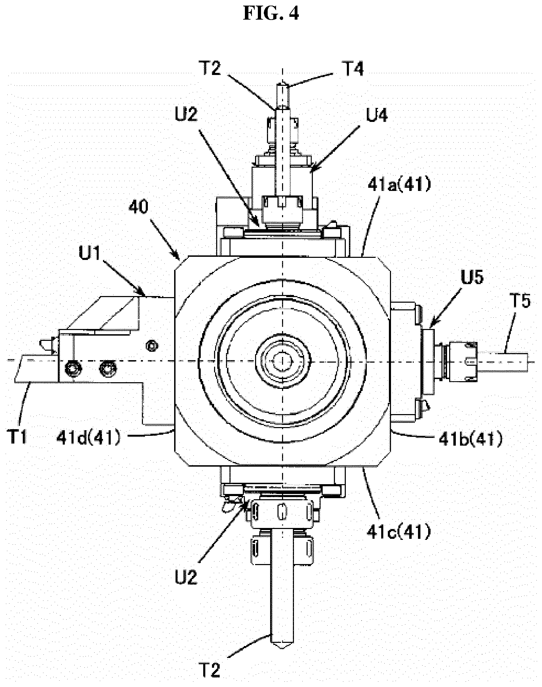

FIG. 2 is a perspective view of the schematically illustrated turret head 40. FIG. 3 is a perspective view of the turret head 40 where a plurality of tool units U0 are attached. FIG. 4 is a plan view of the turret head 40 where a plurality of tool units U0 are attached. The tool units U0 in FIG. 3 are different from the tool units U0 in FIG. 4. The turret head 40 may have a plurality of turret surfaces 41 where the tool unit U0 can be radially attached around the B-axis (the indexing axis AX2). As shown in FIG. 2 to 4, the turret head 40 has four turret surfaces 41a to 41d around the B-axis (the indexing axis AX2) at 90 degrees intervals. The turret surfaces 41a to 41d are collectively referred to as the turret surface 41. The turret surface 41a is opposite the turret surface 41c. The turret surface 41b is opposite the turret surface 41d. The turret surface 41a makes an angle of 90 degrees with respect to the adjacent turret surface 41b and with respect to the adjacent turret surface 41d. The turret surface 41c makes an angle of 90 degrees with respect to the adjacent turret surface 41d and with respect to the adjacent turret surface 41b.

The turret surfaces 41 each has a plurality of attaching positions P0 provided in the Y-axis direction (an example of the indexing axis direction D2) extended in the B-axis direction (AX2). The attaching positions P0 may comprise the first attaching position P1 on the lower side and the second attaching position P2 on the upper side in the Y-axis direction (the D2 direction). They are collectively referred to as the attaching positions P0. The number of the attaching positions may be three or more. Part of the turret surfaces 41 may have only a single attaching position. Part of the tool unit U0 may be inserted into a through-hole H0 formed in the attaching position P0. A plurality of screw holes H1 (four in FIG. 2) may be formed on the turret surface 41 around the though-hole H0. The tool unit U0 may be attached at the center of the hole H1 by tightening a screw SC1 in the screw hole H1. On the turret surfaces 41 each, the tool units U0 can be attached in the shape of a comb and in a detachable manner.

The turret head 40 may be provided with a rotation driving unit 42 in a position corresponding to the lower attaching position P1. A rotary tool unit can be removably attached on the turret surfaces 41 each. When a rotary tool unit is attached to the attaching position P1 of the turret surface 41a, 41b, 41c, and 41, a rotary tool of the rotary tool unit is driven by the rotation driving unit 42. The rotation driving unit 42 may be provided in the position corresponding to the upper attaching position P2. The rotation driving unit corresponding to the lower attaching position P1 may be removed.

As shown in FIG. 3 or FIG. 4, the tool unit U0 may comprise a stationary tool unit and a rotary tool unit. The stationary tool unit may comprise a turning tool unit U1 and a drill unit U2. The rotary tool unit may comprise a rotary drill unit U3 and U4, an endmill unit U5, and a polygon cutter unit (not shown). The turning tool unit U1 has a turning tool T1. The drill unit U2 has a drill T2. The rotary drill unit U3 has a rotary drill T3. The rotary drill unit U4 has a plurality of rotary drills T4. The endmill unit U5 has an endmill T5. The turning tool T1, the drill T2, the rotary drills T3 and T3, and the endmill T5 are collectively referred to as the tool T0.

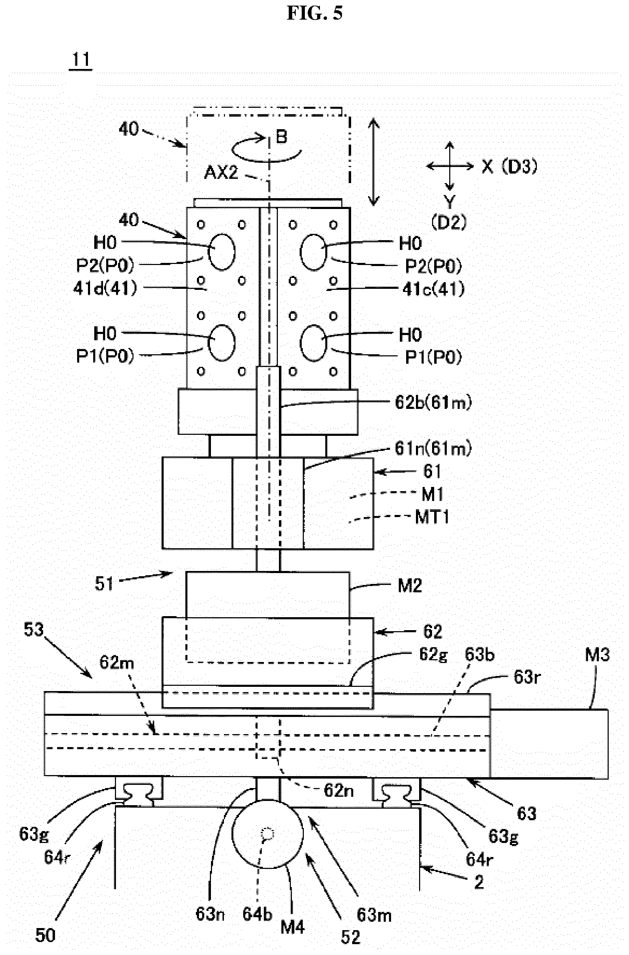

FIG. 5 schematically shows the turret driving unit 50 which drives the turret head 40 in the X-axis direction (an example of the tool post opposite direction D3), Y-axis direction (an example of the indexing axis direction D2), the Z-axis direction (an example of the spindle axis direction D1), and the rotational direction. The turret driving unit 50 may be of various modified configurations.

The turret driving unit 50 may comprise an elevator 61 containing a rotation driving motor M1 for rotating the turret head 40 on the B-axis (AX2). The rotation driving motor M1 may be a servo motor which rotates the turret head 40 on the B-axis according to a command from the NC apparatus 7. The B-axis is a control axis for rotation used to index the tool unit U0. The elevator 61 may be provided with a nut 61n to be engaged with a ball screw 62b whose longitudinal direction is along the Y-axis direction. The ball screw 62b and the nut 61n constitute a feeding mechanism 61m which bidirectionally moves the turret head 40 on the elevator 61 in the Y-axis direction.

The turret driving unit 50 may further comprise an X-axis direction slide bed 62 provided with a Y-axis direction driving motor M2 which bidirectionally moves the turret head 40 in the Y-axis direction. The Y-axis direction driving motor M2 is a servo motor which rotationally drives the ball screw 62b according to a command from the NC apparatus 7. The turret head 40 on the elevator 61 is moved by the feeding mechanism 61m in the Y-axis direction. The Y-axis is a control axis for rotation and for tool selection used to select the tool unit U0. The turret driving unit 50 rotates the turret head 40 on the B-axis (AX2) and moves the turret head 40 in the Y-axis direction (D2) to switch the tool units U0 for use. The rotation driving motor M1, the Y-axis direction driving motor M2, the elevator 61, and the feeding mechanism 61m constitute the switching driving unit 51.

The X-axis direction slide bed 62 may comprise a pair of rails 63r, a pair of guides 62g slidably engaged with the rails 63r in the X-axis direction, and a nut 62n engaged with a ball screw 63b whose longitudinal direction is along the X-axis direction. The ball screw 63b with the nut 62n and the X-axis direction slide bed 62 constitute a feeding mechanism 62m which bidirectionally moves the turret head 40 in the X-axis direction.

The turret driving unit 50 may further comprise a Z-axis direction slide bed 63 provided with an X-axis direction driving motor M3 which bidirectionally moves the turret head 40 in the X-axis direction. The X-axis direction driving motor M3 is a servo motor which rotationally drives the ball screw 63b according to a command from the NC apparatus 7. The turret head 40 and the X-axis direction slide bed 62 is moved by the feeding mechanism 62m in the X-axis direction. As described, the turret driving unit 50 moves the turret head 40 in the X-axis direction (D3). The X-axis direction driving motor M3, the X-axis direction slide bed 62, and the feeding mechanism 62m constitute the first opposite driving unit 53.

The Z-axis direction slide bed 63 may comprise a pair of rails 64r, a pair of guides 63g slidably engaged with the rails 64r in the Z-axis direction, and a nut 63n engaged with a ball screw 64b whose longitudinal direction is along the Z-axis direction. The ball screw 64b with the nut 63n and the Z-axis direction slide bed 63 constitute a feeding mechanism 63m which bidirectionally moves the turret head 40 in the Z-axis direction.

The turret driving unit 50 may further comprise a Z-axis direction driving motor M4 which bidirectionally moves the turret head 40 in the Z-axis direction. The Z-axis direction driving motor M4 is mounted on the bed 2. The Z-axis direction driving motor M4 is a servo motor which rotationally drives the ball screw 64b according to a command from the NC apparatus 7. The turret head 40 on the Z-axis direction slide bed 63 is moved by the feeding mechanism 63m in the Z-axis direction. The tool unit U0 attached to the turret head 40 can be brought to work on the workpiece W1 held by the front spindle 31 and the workpiece W2 held by the back spindle. As described, the turret driving unit 50 moves the turret head 40 in the Z-axis direction (D1). The Z-axis direction driving motor M4, the Z-axis direction slide bed 63, and the feeding mechanism 63m constitute the Z-axis driving unit 52.

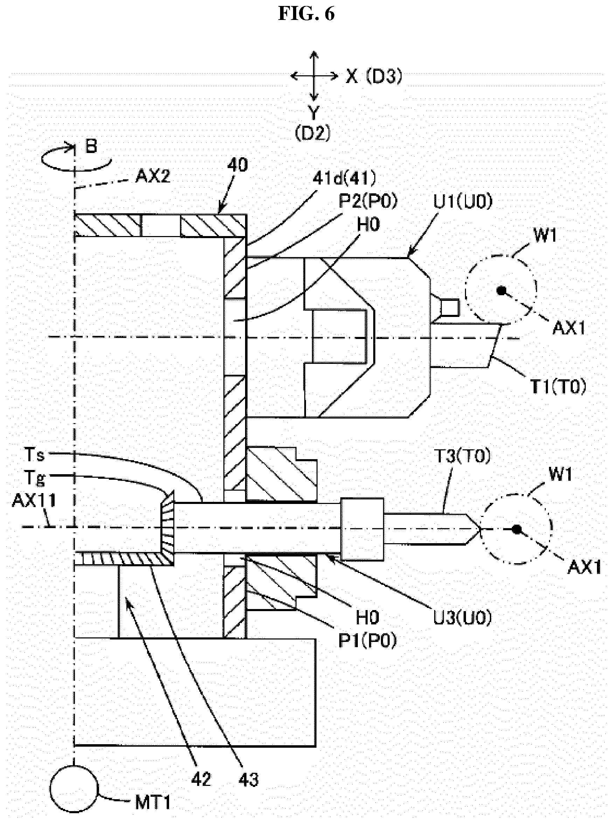

FIG. 6 is a partial sectional view of part of the turret head 40 to which a plurality of tool units U0 are attached. The turret head 40 may be of various modified configurations. On the turret surface 41d, the rotary drill unit U3 is attached to the lower attaching position P1 while the turning tool unit U1 is attached to the upper attaching position P2. The rotation driving unit 42 provided in a position corresponding to the lower attaching position P1 comprises a driving gear 43 and a rotary tool driving motor MT1. The driving gear 43 is engaged with a driven gear Tg of a rotary tool shaft Ts of the rotary tool unit. The rotary tool driving motor MT1 rotates the driving gear 43 on the B-axis (AX2). The gears 43 and Tg may be bevel gears and other gears of any type which transmit the torque of the rotary tool driving motor MT1 to the rotary tool. The rotary tool driving motor MT1 rotates the rotary tool (such as the rotary drill T3) via the gears 43 and Tg according to a command from the NC apparatus 7. The rotary tool shaft Ts having a rotating axis AX11 is extended across the turret surface 41. The rotating axis AX11 perpendicular to the B-axis (AX2) is extended through the center of the through-hole H0 of the attaching position P1. The rotary tool attached on an extended line of the rotating axis AX11 is rotated on the rotating axis AX11 in a position across the attaching position P1.

The tool units U0 for use may be switched by rotating the turret head 40 around the B-axis by the rotation driving motor M1 and by moving the turret head 40 in the Y-axis direction (D2) by the Y-axis direction driving motor M2. For example, the turning tool unit U1 attached to the attaching position P2 of the turret surface 41d is intended for front machining use. The rotation driving motor M1 may be controlled by the NC apparatus 7 to position the turret surface 41d opposite the spindle 31 and the Y-direction driving motor M2 may be controlled by the NC apparatus 7 to position the upper attaching position P2 opposite the spindle axis AX1. The NC apparatus 7 may control the turret head 40 in the X-axis, Y-axis, and Z-axis directions and around the B-axis to bring the turning tool T1 to work on the workpiece W1.

Then the turning tool unit U1 for use is intended to be replaced by the rotary drill unit U3 attached to the attaching position P1. The Y-direction driving motor M2 may be controlled by the NC apparatus 7 to position the lower attaching position P1 opposite the spindle axis AX1. The NC apparatus 7 may control the turret head 40 in the X-axis, Y-axis, and Z-axis directions and around the B-axis to bring the rotary drill T3 to work on the workpiece W1.

Further, the Z-axis direction driving motor M4 may be controlled by the NC apparatus 7 to move the turret head 40 to a position to work on the workpiece W2 whose front has been worked. The tool units U0 for back machining use may be switched when the turret head 40 is rotated around the B-axis by the rotation driving motor M1 and moved in the Y-axis direction (D2) by the Y-axis direction driving motor M2.

The turret head 40 has the turret surfaces 41a and 41c arranged at an angle of 180 degrees and the turret surfaces 41b and 41d arranged at an angle of 180 degrees, which enables the lathe 1 to simultaneously machine the workpiece W1 held by the front spindle 31 and the workpiece W2 held by the back spindle 32 by the single turret head 40.

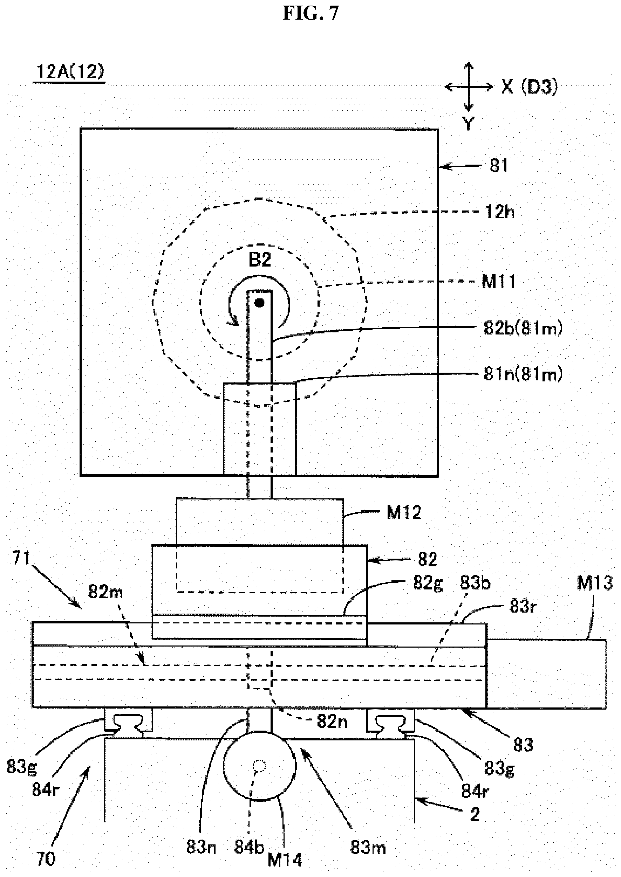

FIG. 7 schematically shows the opposite tool post driving unit 70 for driving the opposite tool post 12A for front machining use in the X-axis, Y-axis, Z-axis, and the rotational directions. The FIG. 7 configuration is only an embodiment. The opposite tool post driving unit 70 may be of various modifications. The opposite tool post driving unit 70 for driving the opposite tool post 12B for back machining use is not shown since it may be of the same configuration except the difference of the B2-axis and the B3-axis.

The opposite tool post driving unit 70 may comprise an elevator 81 containing a rotation driving motor M11 for rotating the turret head 12h on the B2-axis. The rotation driving motor M11 may be a servo motor which rotates the turret head 12h on the B2-axis according to a command from the NC apparatus 7. The elevator 81 may be provided with a nut 81n engaged with a ball screw 82b whose longitudinal direction is along the Y-axis direction. The ball screw 82b and the nut 81n constitute a feeding mechanism 81m which bidirectionally moves the elevator 81 and thereby the turret head 12h on in the Y-axis direction.

The opposite tool post driving unit 70 may further comprise an X-axis direction slide bed 82 provided with a Y-axis direction driving motor M12 which bidirectionally moves the turret head 12h in the Y-axis direction. The Y-axis direction driving motor M12 is a servo motor which rotationally drives the ball screw 82b according to a command from the NC apparatus 7. The turret head 12h on the elevator 81 is moved by the feeding mechanism 81m in the Y-axis direction.

The X-axis direction slide bed 82 may comprise a pair of rails 83r, a pair of guides 82g slidably engaged with the rails 83r in the X-axis direction, and a nut 82n engaged with a ball screw 83b whose longitudinal direction is along the X-axis direction. The ball screw 83b and the nut 82n constitute a feeding mechanism 82m which bidirectionally moves the X-axis direction slide bed 82 and thereby the turret head 12h in the X-axis direction.

The opposite tool post driving unit 70 may further comprise a Z-axis direction slide bed 83 provided with an X-axis direction driving motor M13 which bidirectionally moves the turret head 12h in the X-axis direction. The X-axis direction driving motor M13 is a servo motor which rotationally drives the ball screw 83b according to a command from the NC apparatus 7. The turret head 12h on the X-axis direction slide bed 82 is moved by the feeding mechanism 82m in the X-axis direction. As described, the opposite tool post driving unit 70 moves the turret head 12h in the X-axis direction (D3). The X-axis direction driving motor M13, the X-axis direction slide bed 82, and the feeding mechanism 82m constitute a second opposite driving unit 71.

The Z-axis direction slide bed 83 may comprise a pair of rails 84r, a pair of guides 83g slidably engaged with the rails 84r in the Z-axis direction, and a nut 83n engaged with a ball screw 84b whose longitudinal direction is along the Z-axis direction. The ball screw 84b and the nut 83n constitute a feeding mechanism 83m which bidirectionally moves the Z-axis direction slide bed 83 and thereby the turret head 12h in the Z-axis direction.

The opposite tool post driving unit 70 may further comprise a Z-axis direction driving motor M14 which bidirectionally moves the turret head 12h in the Z-axis direction. The Z-axis direction driving motor M14 is mounted on the bed 2. The Z-axis direction driving motor M14 is a servo motor which rotationally drives the ball screw 84b according to a command from the NC apparatus 7. The turret head 12h on the Z-axis direction slide bed 83 is moved by the feeding mechanism 83m in the Z-axis direction.

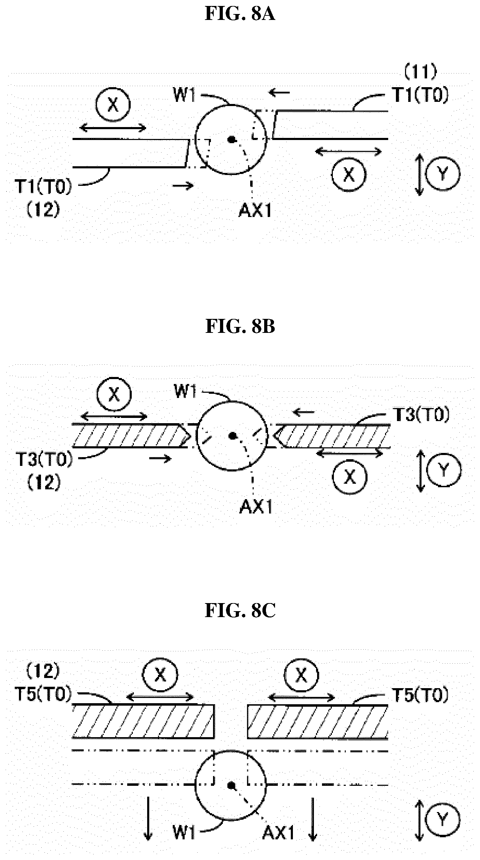

As shown in FIG. 8A to 8C, a tool unit of the turret 11 and another tool unit of the opposite tool post can be simultaneously applied to the workpiece W1. FIG. 8A shows the way that a balance-cut is performed by a turning tool T1 (tool T0) attached to the turret 11 and by another turning tool T1 (tool T0) attached to the opposite tool post 12. A roughing turning tool may work on one side of the workpiece and a finishing turning tool may simultaneously work on the other side of the workpiece to perform the balance-cut. The position of the tool posts 11 and 12 in the Y-axis direction may be controlled by the NC apparatus 7 to position the turning tools T1 opposite the workpiece W1. The tool posts 11 and 12 may be further controlled to be in an X-axis position suitable for the balance-cut performance by the turning tools T1. The spindle 30 (the front spindle 31 and the back spindle 32) may be activated on the spindle axis AX1 before the turning tools T1 acts on the workpiece W1.

FIG. 8B shows the way that a simultaneous drilling is performed by a rotary drill T3 (tool T0) attached to the turret 11 and by another rotary drill T3 (tool T0) attached to the opposite tool post 12. A rotary drill may work on one side of the workpiece and another rotary drill may simultaneously work on the other side of the workpiece to form holes on the sides of the workpiece. The position of the tool posts 11 and 12 in the Y-axis direction may be controlled by the NC apparatus 7 to position the rotary drills T3 opposite the workpiece W1. The tool posts 11 and 12 may be further controlled to be in an X-axis position suitable for the simultaneous drilling by the rotary drills T3. The spindle 30 may be deactivated before the rotary drills T3 acts on the workpiece W1. Further, the rotary drills may be replaced by tapping tools (not shown) to be applied inside the holes formed on the sides of the workpiece.

FIG. 8C shows the way that an H-cut is performed by an endmill T5 (tool T0) attached to the turret 11 and by another endmill T5 (tool T0) attached to the opposite tool post 12. An endmill may work on one side of the workpiece and another endmill may simultaneously work on the other side of the workpiece to parallelly cut the sides of the workpiece. The position of the tool posts 11 and 12 in the X-axis direction may be controlled by the NC apparatus 7 to position the endmills T5 opposite the workpiece W1. The tool posts 11 and 12 may be further controlled to be in a Y-axis position suitable for the H-cut performance by the endmills T5. The spindle 30 may be deactivated before the endmills T5 acts on the workpiece W1.

### (3) Advantageous effects of the embodiment

The tool units U0 for use are switchable only by rotating the turret head 40 on the B-axis (the indexing axis AX2) and by moving the same in the Y-axis direction (the indexing axis direction D2). The B-axis (a rotation axis) also serves as the Y-axis (a tool selection axis). Only the turret head 40 need be rotated on the B-axis (AX2). The entire turret need not be rotated on the B-axis (AX2). The turret therefore occupies less area compared with a conventional one. There is no need for a guide mechanism for the B-axis and for a servo motor for the B-axis. The embodiment therefore contributes to cost reduction. Further, since the turret head 40 has four turret surfaces 41a, 41b, 41c, and 41d around the B-axis (the indexing axis AX2), any tool unit U0 attached to any non-use surface very rarely interferes with the spindle 30. A machining point of the tool unit U0 can be brought close to a chucking point of the spindle 30 for a heavy-cut performance and precision operations. Further, the opposite tool post 12 is arranged on the opposite side of the turret head 40 across the spindle 30, enabling the lathe to perform simultaneous operations on the workpiece W1 such as a balance-cut and other complicated machining. The embodiment provides an improvement in productivity.

The embodiment provides a technology capable of downsizing the lathe and contributes to a low-cost compact lathe of high productivity and versatile functions.

### (4) Modifications

The invention is not limited to a lathe of stationary headstock type. The lathe comprises a lathe of slidable headstock type in which the front spindle is bidirectionally movable in the Z-axis direction. The lathe may be provided with a guide bush for holding the chucked workpiece. The guide bush may be rotatable with the spindle. The invention is not limited to the opposite tool post movable in the X-axis, Y-axis, and Z-axis directions. An opposite tool post not movable in the Y-axis direction is within the scope of the invention.

The invention is not limited to the turret 11 provided with the rotation driving unit 42 for a rotary tool. A turret not provided with the rotation driving unit is within the scope of the invention. The invention is not limited to the turret head having four turret surfaces. A turret head having three or five or more surfaces is within the scope of the invention.

A lathe not provided with the back spindle is within the scope of the invention as far as the tool unit attached to the turret head can be applied to the workpiece.

### (5) Conclusion:

As described above, the invention provides a technology capable of downsizing the lathe. The advantageous effects of the invention are available in a technology embodied only by the requirements recited in the independent claim.

### DESCRPTION OF SYMBOLS

- 1: lathe
- 2: bed
- 7: NC apparatus
- 11: turret
- 12, 12A, 12B: opposite tool post
- 12h: turret head
- 20: headstock
- 21: front headstock
- 22: back headstock
- 30: spindle
- 31: front spindle
- 32: back spindle
- 40: turret head
- 41, 41a to 41d: turret surface
- 43: rotation driving unit
- 50: turret driving unit
- 51: switching driving unit
- 52: Z-axis driving unit
- 53: first opposite driving unit
- 70: opposite tool post driving unit
- 71: second opposite driving unit
- AX1: spindle axis
- AX2: indexing axis
- AX11: rotating axis
- D1: spindle axis direction
- D2: indexing axis direction
- D3: tool post opposite direction
- P0, P1, P2: attaching position
- T0: tool
- U0: tool unit
- W1: workpiece
- W2: front-machined workpiece

## Claims

1. A lathe (1) comprising:
a spindle (30) which rotates a workpiece on a spindle axis (AX1);
a turret head (40) having a plurality of turret surfaces (41) to which a tool unit (U0) is radially attached around an indexing axis (AX2), to at least part of the turret surfaces (41) the tool unit (U0) being attached in a plurality of attaching positions provided in an indexing axis direction (D2) along the indexing axis (AX2); and
a tool unit switching driving unit (51) which rotates the turret head (40) on the indexing axis (AX2) and moves the turret head (40) in the indexing axis direction (D2) to switch the tool units (U0) for use to machine the workpiece,
an opposite tool post (12),
a turret driver (50) comprising a Y-axis direction feeding mechanism (61m) bidirectionally moving the turret head (40) in the indexing axis direction (D2), an X-axis direction feeding mechanism (62m) bidirectionally moving the turret head (40) and the Y-axis direction feeding mechanism (61m) in a direction the turret head (40) and the opposite tool post (12) facing each other, the direction being different from the indexing axis direction (D2) and a spindle axis direction (D1) parallel to the spindle axis (AX1), and a Z-axis direction feeding mechanism (63m) bidirectionally moving the turret head (40), the Y-axis direction feeding mechanism (61m), and the X-axis direction feeding mechanism (62m) in the spindle axis direction (D1),
**characterised in that**
the turret head (40), the Y-axis direction feeding mechanism (61m), the X-axis direction feeding mechanism (62m), and the Z-axis direction feeding mechanism (63m) are sequentially stacked in the indexing axis direction (D2) which is a vertical direction with respect to a base of the lathe (1).

2. The lathe (1) of claim 1 further comprising a first opposite driver (53), and a second opposite driver (71),
wherein the turret head (40) and the opposite tool post (12) are disposed on opposite sides of the workpiece in the direction the turret head (40) and the opposite tool post (12) facing each other, the first opposite driver (53) moves the turret head (40) in the direction the turret head (40) and the opposite tool post (12) facing each other, and the second opposite driver (71) moves the opposite tool post (12) in the direction the turret head (40) and the opposite tool post (12) facing each other.

3. The lathe (1) of claim 1 or 2, wherein the turret head (40) has four turret surfaces (41a, 41b, 41c, 41d) around the indexing axis (AX2).

## Patentansprüche

1. Drehmaschine (1), umfassend:
eine Spindel (30), die ein Werkstück (W1) um eine Spindelachse (AX1) dreht;
einen Revolverkopf (40) mit einer Vielzahl von Revolverflächen (41), an denen eine Werkzeugeinheit (U0) radial um eine Indexierungsachse (AX2) herum an mindestens einem Teil der Revolverflächen (41) befestigt ist, wobei die Werkzeugeinheit (U0) in einer Vielzahl von Befestigungspositionen befestigt ist, die in einer Indexierungsachsenrichtung (D2) entlang der Indexierungsachse (AX2) vorgesehen sind; und
eine Werkzeugeinheiten-Schaltantriebseinheit (51), die den Revolverkopf (40) auf der Indexierungsachse (AX2) dreht und den Revolverkopf (40) in der Indexierungsachsenrichtung (D2) bewegt, um die Werkzeugeinheiten (U0) zur Verwendung bei der Bearbeitung des Werkstücks zu schalten,
eine Gegenwerkzeugsäule (12),
eine Revolverantriebsvorrichtung (50), die einen Y-Achsenrichtungs-Vorschubmechanismus (61m), der den Revolverkopf (40) bidirektional in der Indexierungsachsenrichtung (D2) bewegt, einen X-Achsenrichtungs-Vorschubmechanismus (62m), der den Revolverkopf (40) und den Y-Achsenrichtungs-Vorschubmechanismus (61m) bidirektional in einer Richtung, in der der Revolverkopf (40) und eine Gegenwerkzeugsäule (12) einander zugewandt sind, bewegt, wobei die Richtung sich von der Indexierungsachsenrichtung (D2) und einer Spindelachsenrichtung (D1) parallel zur Spindelachse (AX1) unterscheidet, und einen Z-Achsenrichtungs-Vorschubmechanismus (63m) umfasst, der den Revolverkopf (40), den Y-Achsenrichtungs-Vorschubmechanismus (61m) und den X-Achsenrichtungs-Vorschubmechanismus (62m) bidirektional in der Spindelachsenrichtung (D1) bewegt,
**dadurch gekennzeichnet, dass**
der Revolverkopf (40), der Y-Achsenrichtungs-Vorschubmechanismus (61m), der X-Achsenrichtungs-Vorschubmechanismus (62m) und der Z-Achsenrichtungs-Vorschubmechanismus (63m) nacheinander in der Indexierungsachsenrichtung (D2) gestapelt sind, die eine vertikale Richtung in Bezug auf eine Basis der Drehmaschine (1) ist.

2. Drehmaschine (1) nach Anspruch 1, die ferner eine erste Gegenantriebsvorrichtung (53) und eine zweite Gegenantriebsvorrichtung (71) umfasst, wobei der Revolverkopf (40) und die Gegenwerkzeugsäule (12) auf gegenüberliegenden Seiten des Werkstücks in der Richtung angeordnet sind, in der der Revolverkopf (40) und die Gegenwerkzeugsäule (12) einander zugewandt sind, wobei die erste Gegenantriebsvorrichtung (53) den Revolverkopf (40) in der Richtung bewegt, in der der Revolverkopf (40) und die Gegenwerkzeugsäule (12) einander zugewandt sind, und die zweite Gegenantriebsvorrichtung (71) die Gegenwerkzeugsäule (12) in der Richtung bewegt, in der der Revolverkopf (40) und die Gegenwerkzeugsäule (12) einander zugewandt sind.

3. Drehmaschine (1) nach Anspruch 1 oder 2, wobei der Revolverkopf (40) vier Revolverflächen (41a, 41b, 41c, 41d) um die Indexierungsachse (AX2) herum aufweist.

## Revendications

1. Tour (1) comprenant :
une broche (30) qui met en rotation une pièce à oeuvrer sur un axe de broche (AX1) ;
une tête de tourelle (40) ayant une pluralité de surfaces de tourelle (41) auxquelles une unité d'outil (U0) est radialement fixée autour d'un axe d'indexation (AX2), à au moins une partie des surfaces de tourelle (41), l'unité d'outil (U0) étant fixée dans une pluralité de positions de fixation prévues dans une direction d'axe d'indexation (D2) le long de l'axe d'indexation (AX2) ; et
une unité d'entraînement de changement d'unité d'outil (51) qui met en rotation la tête de tourelle (40) sur l'axe d'indexation (AX2) et qui déplace la tête de tourelle (40) dans la direction d'axe d'indexation (D2) pour changer les unités d'outil (U0) à utiliser pour usiner la pièce à oeuvrer,
un poste d'outil opposé (12),
un moyen d'entraînement de tourelle (50) comprenant un mécanisme d'alimentation de direction d'axe Y (61m) déplaçant de manière bidirectionnelle la tête de tourelle (40) dans la direction d'axe d'indexation (D2), un mécanisme d'alimentation de direction d'axe X (62m) déplaçant de manière directionnelle la tête de tourelle (40) et le mécanisme d'alimentation de direction d'axe Y (61m) dans une direction où la tête de tourelle (40) et le poste d'outil opposé (12) se font face, la direction étant différente de la direction d'axe d'indexation (D2) et d'une direction d'axe de broche (D1) parallèle à l'axe de broche (AX1), et un mécanisme d'alimentation de direction d'axe Z (63m) déplaçant de manière bidirectionnelle la tête de tourelle (40), le mécanisme d'alimentation de direction d'axe Y (61m) et le mécanisme d'alimentation de direction d'axe X(62m) dans la direction d'axe de broche (D1),
**caractérisé en ce que**
la tête de tourelle (40), le mécanisme d'alimentation de direction d'axe Y (61m), le mécanisme d'alimentation de direction d'axe X (62m) et le mécanisme d'alimentation de direction d'axe Z (63m) sont empilés séquentiellement dans la direction d'axe d'indexation (D2) qui est une direction verticale par rapport à une base du tour (1).

2. Tour (1) selon la revendication 1, comprenant en outre un premier moyen d'entraînement opposé (53) et un second moyen d'entraînement opposé (71),
dans lequel la tête de tourelle (40) et le poste d'outil opposé (12) sont disposés sur des côtés opposés de la pièce à oeuvrer dans la direction où la tête de tourelle (40) et le poste à outil opposé (12) se font face, le premier moyen d'entraînement opposé (53) déplace la tête de tourelle (40) dans la direction où la tête de tourelle (40) le poste d'outil opposé (12) se font face, et le second moyen d'entraînement opposé (71) déplace le poste d'outil opposé (12) dans la direction où la tête de tourelle (40) et le poste d'outil opposé (12) se font face.

3. Tour (1) selon la revendication 1 ou 2, dans lequel la tête de tourelle (40) a quatre surfaces de tourelle (41a, 41b, 41c, 41d) autour de l'axe d'indexation (AX2).
